(19) **Europäisches Patentamt / European Patent Office / Office européen des brevets**

(11) **EP 3 879 466 A1**

(12) # EUROPEAN PATENT APPLICATION

(43) Date of publication:
**15.09.2021 Bulletin 2021/37**

(51) Int Cl.:
**G06Q 10/00** (2012.01)    **G06Q 10/04** (2012.01)
**G06Q 50/30** (2012.01)

(21) Application number: **21152287.5**

(22) Date of filing: **19.01.2021**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(30) Priority: **10.03.2020  JP 2020041348** | (71) Applicant: **FUJITSU LIMITED**<br>**Kanagawa 211-8588 (JP)**<br><br>(72) Inventor: **Ito, Yuto**<br>**Kanagawa, 211-8588 (JP)**<br><br>(74) Representative: **Hoffmann Eitle**<br>**Patent- und Rechtsanwälte PartmbB**<br>**Arabellastraße 30**<br>**81925 München (DE)** |

(54) **INFORMATION PROCESSING APPARATUS, ROUTE GENERATION METHOD, AND ROUTE GENERATION PROGRAM**

(57)    An information processing apparatus includes a generation unit, a narrowing-down unit, and an arithmetic unit. The generation unit generates a plurality of routes satisfying a first condition among a plurality of conditions included in a vehicle routing problem. The narrowing-down unit, when a total cost for each route satisfying a second condition among the plurality of conditions is calculated from the plurality of routes, performs narrowing-down on the plurality of routes based on the total cost and a value that is set for the route, the value indicating whether or not the route satisfies the second condition and being set to a real number which is equal to or greater than 0 and equal to or smaller than 1 by linear relaxation. The arithmetic unit calculates a route satisfying the first condition and the second condition based on information on the plurality of routes narrowed down by the narrowing-down unit.

## FIG. 1

**Description**

[Technical Field]

The embodiments discussed herein are related to an information processing apparatus and the like.

[Background Art]

One of combinatorial optimization problems is a vehicle routing problem. For example, in the vehicle routing problem, it is considered that a plurality of transport vehicles that wait at a specific facility called a depot transport goods from the depot to customer positions, and then return to the depot or that the transport vehicles transport goods located at customer positions to the depot. In the following description, a transport vehicle is referred to as a "vehicle". A customer position is referred to as a "node".

Pieces of data given in the vehicle routing problem are as follows: the number of nodes; a travel time for which the vehicle travels between nodes; the amount of goods that are to be transported from the depot to each node (or from each node to the depot); a time slot in which the vehicle visits each node; the maximum load capacity of each vehicle; and a cost for operating each vehicle for a certain time. In the following description, the amount of goods that are to be transported is referred to as a "demand". The time slot in which the vehicle visits each node is referred to as a "time window".

A problem of obtaining routes of individual vehicles to minimize the sum of costs of the individual vehicles when the aforementioned pieces of data are given is the vehicle routing problem.

The route of each vehicle includes information indicating a node which the vehicle visits and a time when the vehicle visits the node, and information indicating the amount of goods to be transported to (or from) each node visited by the vehicle. In the following description, the amount of goods to be transported to (or from) each node visited by the vehicle is referred to as a "supply".

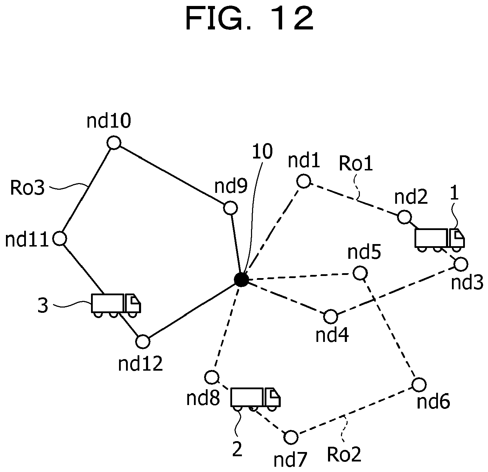

FIG. 12 is a diagram for describing routes of vehicles. In the example illustrated in FIG. 12, a depot 10 and nodes nd1 to nd12 are provided. In the description with reference to FIG. 12, illustrations of times when the vehicles visit the nodes and supplies are omitted. For example, the route of a vehicle 1 is set to a route Ro1, the route of a vehicle 2 is set to a route Ro2, and the route of a vehicle 3 is set to a route Ro3.

The route Ro1 is a route along which the vehicle 1 visits the depot 10 and the nodes nd1 to nd4. The route Ro2 is a route along which the vehicle 2 visits the depot 10 and the nodes nd5 to nd8. The route Ro3 is a route along which the vehicle 3 visits the depot 10 and the nodes nd9 to nd11.

For example, as a strategy for solving the vehicle routing problem, there are a step (step 1) of generating routes and a step (step 2) of selecting a route. In step 1, as the route of each vehicle, as many routes that satisfy conditions of the problem as possible are generated. As the conditions of the problem, a condition of the time window and a condition of the maximum load capacity are set.

In step 2, among the routes generated in step 1, a set of routes that satisfies the demands of all the nodes and minimizes the sum of costs is selected. For example, the process of step 2 is executed by an optimization apparatus such as an Ising machine.

[Citation List]

[Patent Literature]

[PTL 1] Japanese Laid-open Patent Publication No. 2017-167757
[PTL 2] Japanese Laid-open Patent Publication No. 2019-28992

[Summary of Invention]

[Technical Problem]

In a case where the number of routes generated in step 1 is enormous, if all the routes generated in step 1 are input to the optimization apparatus to attempt to obtain a solution, it takes time for the optimization apparatus to select an optimum route in step 2.

In one aspect, an object of the present disclosure is to provide an information processing apparatus, a route generation method, and a route generation program with which the time taken by an optimization apparatus to select an optimum route may be reduced.

[Solution to problem]

In the one aspect, an information processing apparatus includes a generation unit, a narrowing-down unit, and an arithmetic unit. The generation unit configured to generate a plurality of routes satisfying a first condition among a plurality of conditions included in a vehicle routing problem. The narrowing-down unit configured to, when a total cost for each route satisfying a second condition among the plurality of conditions is calculated from the plurality of routes, perform narrowing-down on the plurality of routes based on the total cost and a value that is set for the route, the value indicating whether or not the route satisfies the second condition and being set to a real number which is equal to or greater than 0 and equal to or smaller than 1 by linear relaxation. The arithmetic unit configured to calculate a route satisfying the first condition and the second condition by inputting information on the plurality of routes narrowed down by the narrowing-down unit to an Ising model.

[Effects of Invention]

The time taken by the optimization apparatus to select an optimum route may be reduced.

[Brief Description of Drawings]

FIG. 1 is a diagram for describing a process of generating routes;
FIG. 2 is a diagram illustrating a relation between an operation time and cost of each route;
FIG. 3 is a flowchart illustrating a process procedure of a reference apparatus;
FIG. 4 is a flowchart illustrating an example of a process procedure of a route generation process;
FIG. 5 is a functional block diagram illustrating a configuration of an information processing apparatus according to an embodiment;
FIG. 6 is a diagram illustrating an example of a data structure of a travel time table;
FIG. 7 is a diagram illustrating an example of a data structure of a demand table;
FIG. 8 is a diagram illustrating an example of a data structure of a time window table;
FIG. 9 is a flowchart illustrating a process procedure of the information processing apparatus according to the embodiment;
FIG. 10 is a flowchart illustrating a process procedure of a route narrowing-down process;
FIG. 11 is a diagram illustrating an example of a hardware configuration of a computer that implements functions similar to those of the information processing apparatus according to the embodiment; and
FIG. 12 is a diagram for describing routes of vehicles.

[Description of Embodiments]

Hereinafter, an embodiment of an information processing apparatus, a route generation method, and a route generation program disclosed in the present application will be described in detail with reference to the drawings. Note that, the present disclosure is not limited to the embodiment.

[Embodiments]

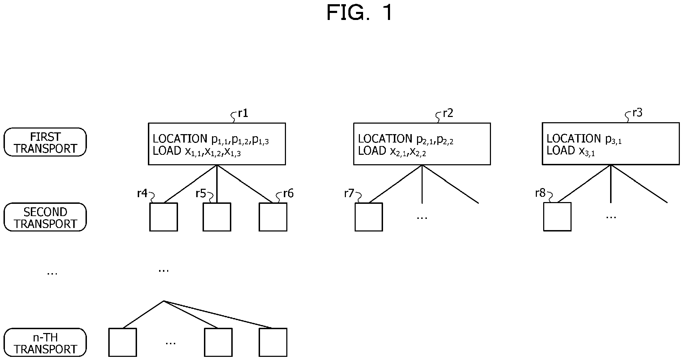

Prior to description of an information processing apparatus according to an embodiment, a reference technique for performing route selection will be described. An apparatus related to the reference technique is referred to as a "reference apparatus" for convenience. For example, the reference apparatus executes a process of generating routes, a process of narrowing down routes, and a process of selecting a route.
The "process of generating routes" executed by the reference apparatus will be described. FIG. 1 is a diagram for describing the process of generating routes. The reference apparatus firstly generates routes that satisfy the conditions of the vehicle routing problem, as a route of a first transport. If all the routes satisfying the conditions of the vehicle routing problem are generated, the number of all the generated routes becomes enormous. Thus, for example, the reference apparatus generates only routes for which a payload rate of a vehicle is equal to or greater than a threshold.
The example illustrated in FIG. 1 indicates that three routes (routes r1, r2, and r3) are generated as the route of the first transport. In each route, a vehicle may visit a plurality of locations. The route r1 is a route passing through locations $p_{1,1}$, $p_{1,2}$, and $p_{1,3}$ of the respective nodes. Loads $x_{1,1}$, $x_{1,2}$, and $x_{1,3}$ corresponding to the locations $p_{1,1}$, $p_{1,2}$, and $p_{1,3}$ correspond to demands of the corresponding nodes, respectively. For example, the demand of the node at the location $p_{1,1}$ is represented by "$x_{1,1}$".

The route r2 is a route passing through the locations $p_{2,1}$ and $p_{2,2}$ of the respective nodes. Loads $x_{2,1}$ and $x_{2,2}$ corresponding to the locations $p_{2,1}$ and $p_{2,2}$ correspond to demands of the corresponding nodes, respectively.

The route r3 is a route passing through the location $p_{3,1}$ of a node. A load $x_{3,1}$ corresponding to the location $p_{3,1}$ corresponds to a demand of the corresponding node.

Then, the reference apparatus generates a route for transporting goods (remaining demands) that are not able to be transported in routs of the first to (i - 1)th transports, as a route of an i-th transport ($i \geq 2$).

The example illustrated in FIG. 1 indicates that in the case where goods are transported in the first transport along the route r1, routes r4, r5, and r6 are generated as the route of a second transport. Since the remaining demand thereafter changes depending on whether the first transport is performed along the route r1 or the route r2, the route generated for the second transport also changes. For example, in a case where the first transport is performed along the route r2, a route r7 and the like are generated as the route of the second transport. In a case where the first transport is performed along the route r3, a route r8 and the like are generated as the route of the second transport. Description of the locations and the loads of the routes r4 to r8 will be omitted.

The reference apparatus does not generate routes of the (n+1)th and subsequent transports when the remaining demand at all the nodes become 0 after goods are transported along a certain route generated for the n-th transport.

Next, the "process of narrowing down routes" executed by the reference apparatus will be described. The reference apparatus removes a route having an operation time which is equal to or longer than a threshold (duration_thres) from among the plurality of routes generated by the process of generating routes.

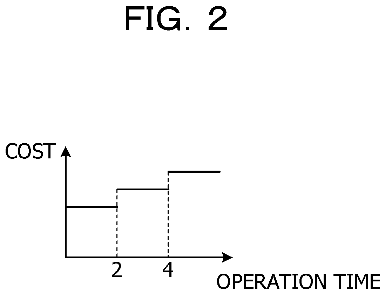

FIG. 2 is a diagram illustrating a relation between the operation time and cost of each route. A horizontal axis of a graph in FIG. 2 corresponds to the operation time of the route, and a vertical axis corresponds to the cost of a vehicle. As illustrated in FIG. 2, as the operation time of the route increases, the cost of the vehicle traveling along the route increases stepwise.

Next, the "process of selecting a route" executed by the reference apparatus will be described. The reference apparatus solves, by using an optimization apparatus such as an Ising machine, an optimization problem of selecting a set of routes that satisfies the demands and has the smallest sum of costs from among the routes narrowed down by the above-described process of narrowing down routes.

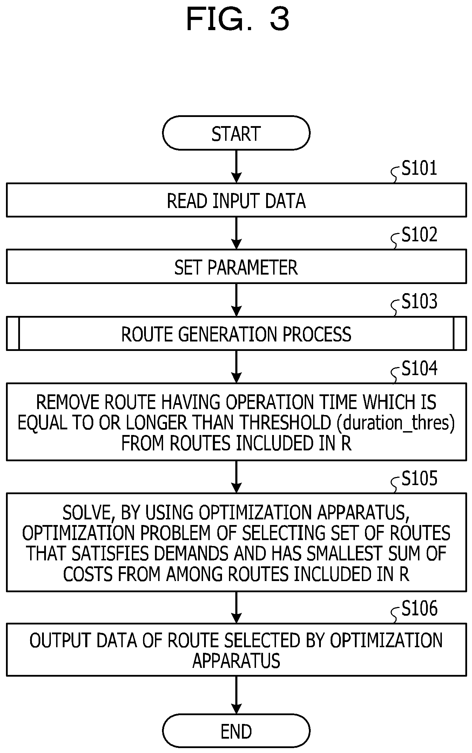

Next, an example of a process procedure of the reference apparatus will be described. FIG. 3 is a flowchart illustrating the process procedure of the reference apparatus. As illustrated in FIG. 3, the reference apparatus reads input data (step S101). The input data includes the demand of each node, the time window, and the travel time between nodes. The reference apparatus sets parameters (step S102). The parameters include the threshold (duration_thres) of the operation time of the route, which is used in narrowing down the routes.

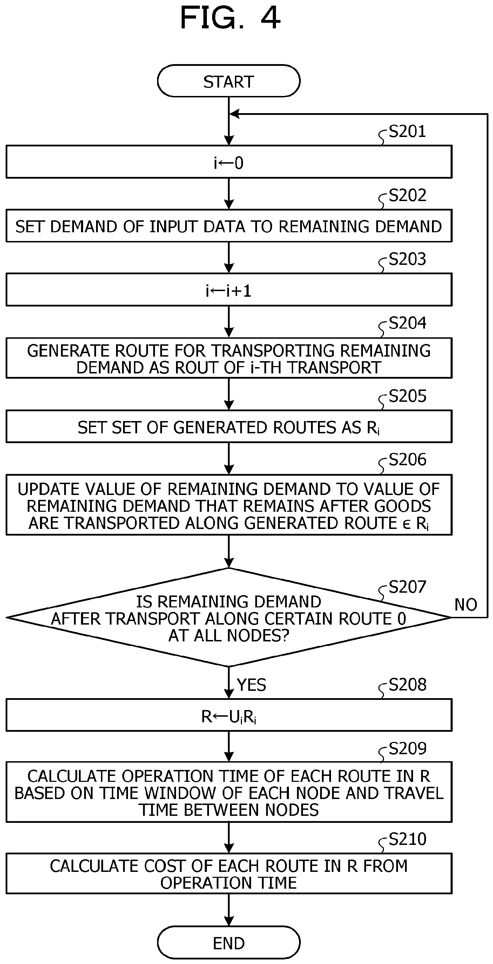

The reference apparatus executes a route generation process (step S103). The reference apparatus removes a route having the operation time which is equal to or longer than the threshold (duration_thres) from among routes included in R (step S104). R will be described later with reference to FIG. 4.

The reference apparatus solves, by using the optimization apparatus, the optimization problem of selecting a set of routes that satisfies the demands and has the smallest sum of costs from among the routes included in R (step S105). The reference apparatus outputs data of the set of routes selected by the optimization problem (step S106).

Next, a process procedure of the route generation process described in step S103 of FIG. 3 will be described. FIG. 4 is a flowchart illustrating an example of the process procedure of the route generation process. As illustrated in FIG. 4, the reference apparatus sets 0 to i (step S201). In the description with reference to FIG. 4, i corresponds to the i-th transport. The reference apparatus sets the demand of the input data to the remaining demand (step S202).

The reference apparatus updates i with a value obtained by adding 1 to i (step S203). The reference apparatus generates routes for transporting the remaining demand, as the route of the i-th transport (step S204). The reference apparatus sets a set of the generated routes as $R_i$ (step S205).

The reference apparatus updates the value of the remaining demand to the value of the remaining demand that remains after the goods are transported along the generated route $\in R_i$ (step S206). If the remaining demand that remains after the goods are transported along a certain route is not 0 at any of the nodes (No in step S207), the reference apparatus causes the process to proceed to step S201.

If the remaining demand that remains after the demand is transported on a certain route is 0 at all the nodes (Yes in step S207), the reference apparatus sets uiRi (collection of the routes for the respective vehicles) to R (step S208). In the reference technique, the operation time of each route in R is calculated based on the time window of each node and the travel time between nodes (step S209). The reference apparatus calculates the cost of each route in R from the operation time (step S210).

As described above, in a case of narrowing down the generated routes, the reference apparatus executes the process of removing a routes having the operation time which is equal to or longer than the threshold (duration_thres). However, it is unclear how to set the threshold (duration_thres). For example, when the threshold is set to be relatively large for safety measures, it is not possible to narrow down routes. Consequently, it takes time for the optimization apparatus to select an optimum route.

Next, a process of the information processing apparatus according to the embodiment will be described. Similarly to the reference technique, the information processing apparatus generates a plurality of routes satisfying the conditions of the vehicle routing problem. In a case of narrowing down routes, the information processing apparatus solves a "linear relaxation problem" a plurality of times. The linear relaxation problem is obtained by linear relaxation of the optimization problem for route selection. The information processing apparatus uses a cost function and a constraint expression as the optimization problem for route selection. It is determined whether or not a second condition is satisfied by the constraint expression.

The cost function is represented by equation (1). The constraint expression is represented by equation (2). In equation (1), r represents a route. $c_r$ represents the cost of the route r. In equation (2), i represents a node. $D_i$ represents the demand at the node i. $S_{r,i}$ represents the supply at the node i in the route r.

[Equation 1]

$$\sum_r c_r\, x_r \qquad \cdots (1)$$

[Equation 2]

$$\sum_r S_{r,\,i}\, x_r \geq D_i \quad \text{for any } i \qquad \cdots (2)$$

In equations (1) and (2), in a case where the linear relaxation is not performed, 0 or 1 indicating whether or not the route r is selected is set to $x_r$ ($x_r \in \{0, 1\}$). For example, $x_r = 1$ in a case where the route r is selected, and $x_r = 0$ in a case where the route r is not selected. In a case where the linear relaxation is not performed, only "0" or "1" is set to $x_r$. Thus, it is not possible to finely adjust the value, and it takes time to specify $x_r$ for which the total cost is minimized.

On the other hand, in equations (1) and (2), in a case where the linear relaxation is performed, the value set to $x_r$ is a real number which is equal to or greater than 0 and smaller than 1 ($x_r \in [0, 1]$).

The information processing apparatus sets a value which is equal to or greater than 0 and smaller than 1 to $x_r$. In a case where the condition of the constraint expression represented by equation (2) is satisfied, the information processing apparatus calculates the total cost by using the cost function represented by equation (1). The information processing apparatus specifies the value of $x_r$ for which the total cost takes the minimum value while changing the value of $x_r$ within a range of 0 or greater and smaller than 1. Regarding $x_r$ of the specified routes, the information processing apparatus selects a route for which the value of $x_r$ is greater than a threshold (thres = 0). As described above, the process in which the information processing apparatus selects the route based on the value of $x_r$ for which the condition of the constraint expression is satisfied and the total cost is minimized corresponds to "solving the linear relaxation problem".

For example, in a case where $x_{r1}$ of the route r1 is equal to 0.5, $x_{r2}$ of the route r2 is equal to 0.6, and $x_{r3}$ of the route r3 is equal to 0, the information processing apparatus selects the route r1 and the route r2. In a case where the linear relaxation is performed, it is possible to set a real number which is equal to or greater than 0 and equal to or smaller than 1 to $x_r$. Thus, it is possible to finely adjust the value and to efficiently specify $x_r$ for which the total cost is minimized.

The information processing apparatus executes a process of solving the linear relaxation problem a plurality of times as follows. The information processing apparatus sets a set of all the generated routes as a "first route set". The information processing apparatus sets an empty set as a "second route set".

The information processing apparatus alternately and repeatedly executes the following operations 1 and 2 n times (for example, four times). In the operation 1, the information processing apparatus solves an optimization problem of selecting an optimum route from route candidates included in the first route set, by linear relaxation.

In the operation 2, the information processing apparatus removes, from the first route set, a route r satisfying $x_r$ > thres in the solution of the operation 1, and adds the route r to the second route set.

The information processing apparatus obtains the solution by inputting, as narrowed routes, the routes included in the second route set to the optimization apparatus (Ising machine) with the above-described process. Compared with the reference technique, the number of narrowed routes may be reduced and the time taken for the optimization apparatus to select the optimum route may be reduced.

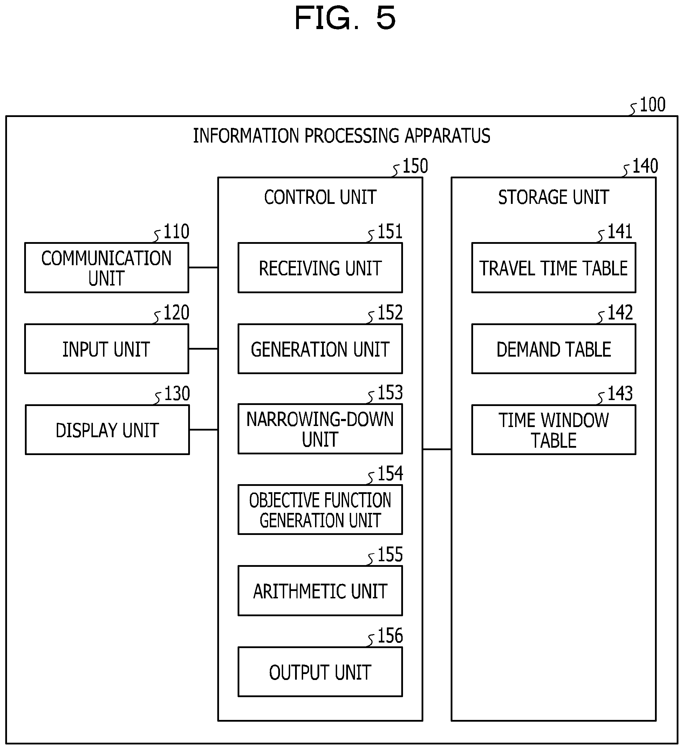

Next, a configuration of the information processing apparatus according to the embodiment will be described. FIG. 5 is a functional block diagram illustrating the configuration of the information processing apparatus according to the embodiment. As illustrated in FIG. 5, an information processing apparatus 100 includes a communication unit 110, an input unit 120, a display unit 130, a storage unit 140, and a control unit 150.

The communication unit 110 is a processing unit that performs data communication with an external device via a network. The communication unit 110 corresponds to a communication device. The control unit 150 exchanges data with the external device via the communication unit 110.

The input unit 120 is an input device for use in inputting various types of data to the control unit 150 of the information processing apparatus 100. The input unit 120 corresponds to a keyboard, a mouse, a touch panel, and the like.

The display unit 130 is a display device that displays information output from the control unit 150. The display unit 130 corresponds to an organic electro-luminescence (EL) display, a liquid crystal display, a touch panel, or the like.

The storage unit 140 includes a travel time table 141, a demand table 142, and a time window table 143. The storage unit 140 corresponds to a semiconductor memory element such as a random-access memory (RAM) or a flash memory, or a storage device such as a hard disk drive (HDD).

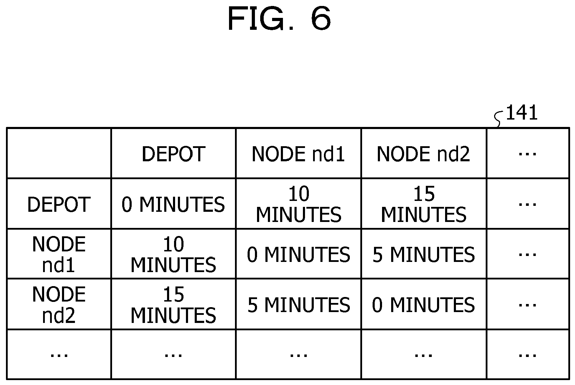

The travel time table 141 is a table in which information regarding the travel time of a vehicle is stored. FIG. 6 is a diagram illustrating an example of a data structure of the travel time table. As illustrated in FIG. 6, the travel time table 141 includes a travel time from a depot to a node (or from the node to the depot) and a travel time between nodes. For example, the travel time from the depot to the node nd1 is "10 minutes". The travel time from the node nd1 to the node nd2 is "5 minutes". Description of other travel times will be omitted.

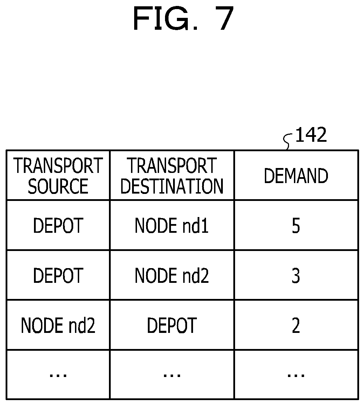

The demand table 142 is a table in which information regarding the demand is stored. FIG. 7 is a diagram illustrating an example of a data structure of the demand table. As illustrated in FIG. 7, in the demand table 142, a transport source, a transport destination, and a demand are associated with each other. For example, the first row in FIG. 7 indicates that the amount of goods (demand) to be transported from the transport source "depot" to the transport destination "node nd1" is "5". Description of other demands will be omitted.

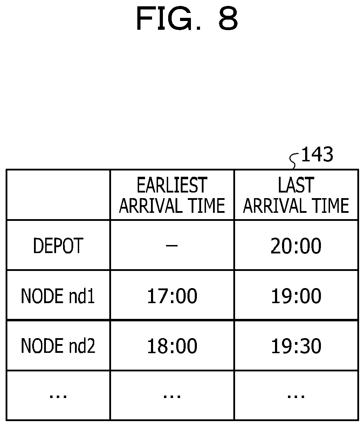

The time window table 143 is a table in which information regarding a time window in which the vehicle visits each node (or depot). FIG. 8 is a diagram illustrating an example of a data structure of the time window table. As illustrated in FIG. 8, there is a constraint that the vehicle returns to the depot by 20:00. A time window in which the vehicle visits the node nd1 is 17:00 to 19:00. A time window in which the vehicle visits the node nd2 is 18:00 to 19:30. Description of time windows in which the vehicle visits other nodes will be omitted.

Description returns to FIG. 5. The control unit 150 includes a receiving unit 151, a generation unit 152, a narrowing-down unit 153, an objective function generation unit 154, an arithmetic unit 155, and an output unit 156. The control unit 150 may be implemented as a central processing unit (CPU), a microprocessor unit (MPU), or the like. The control unit 150 may also be implemented as a hard-wired logic circuit such as an application-specific integrated circuit (ASIC) or a field-programmable gate array (FPGA).

The receiving unit 151 is a processing unit that acquires, as input data, the travel time table 141, the demand table 142, and the time window table 143 from the external device or the like. The receiving unit 151 stores the travel time table 141, the demand table 142, and the time window table 143, which have been acquired, in the storage unit 140. The receiving unit 151 may acquire the input data via the input unit 120.

The generation unit 152 is a processing unit that generates routes based on the travel time table 141, the demand table 142, and the time window table 143. The generation unit 152 outputs information on the generated routes to the narrowing-down unit 153.

The generation unit 152 generates a plurality of routes that satisfy a condition (first condition) among a plurality of conditions included in the vehicle routing problem in the similar manner to the "process of generating routes" executed by the reference apparatus described with reference to FIG. 4 and the like. The first condition is set in advance. For example, the generation unit 152 generates routes that satisfy the conditions of the vehicle routing problem, based on the travel time table 141, the demand table 142, and the time window table 143. The generation unit 152 outputs information on the generated routes to the narrowing-down unit 153.

The process of generating routes, which is executed by the generation unit 152, will be supplemented. For example, in a case where the generation unit 152 generates each of the routes described with reference to FIG. 1 and the like, the generation unit 152 sequentially performs first to fourth steps described below.

The first step will be described. The generation unit 152 enumerates combinations of p nodes selected from among all the nodes in order to determine nodes visited by the vehicle along one route. p corresponds the number of nodes to be visited, and all integers satisfying $1 \leq p \leq p_{max}$ are considered. $p_{max}$ is set as a parameter in advance. If $p_{max}$ is set to a value which is too large, it is impossible to satisfy time windows of all nodes to be visited. Thus, $p_{max}$ is set to a value which is not too large.

The second step will be described. The generation unit 152 calculates the sum of the remaining demands of the nodes for the set of nodes to be visited, which is enumerated in the first step, and determines whether or not the payload rate of the vehicle exceeds the threshold by supplying the corresponding amount. The generation unit 152 does not generate a route along which a vehicle visits the set of such nodes, in a case where the payload rate of the vehicle does not exceed the threshold.

The third step will be described. The generation unit 152 determines the visiting order for the set of nodes to be visited. The generation unit 152 performs the determination so that the vehicle visits the nodes in the order of the shortest operation time, on the condition that the vehicle visits each of the nodes within a range of the time window of the node. The generation unit 152 uses data of the time taken for traveling between nodes when calculating the operation time.

The fourth step will be described. The generation unit 152 determines the supply at the node to be visited. The generation unit 152 performs the maximum supply within a range that does not exceed the maximum load capacity of the vehicle. For a route along which the vehicle visits two or more nodes, the generation unit 152 determines the supply at each node by prioritizing reduction of the remaining demand of the node farther from the depot.

The narrowing-down unit 153 is a processing unit that narrows down the routes generated by the generation unit 152. In a case of narrowing down routes, the narrowing-down unit 153 solves a "linear relaxation problem" a plurality of times. The narrowing-down unit 153 uses the cost function of equation (1) and the constraint expression of equation (2) as an optimization problem for route selection. In equations (1) and (2), in a case where the linear relaxation is performed, the value set to $x_r$ is a real number which is equal to or greater than 0 and smaller than 1 ($x_r \in [0, 1]$).

The narrowing-down unit 153 sets a value which is equal to or greater than 0 and smaller than 1 to $x_r$. In a case where the condition of the constraint expression represented by equation (2) is satisfied, the narrowing-down unit 153 calculates the total cost by using the cost function represented by equation (1). The narrowing-down unit 153 specifies the value of $x_r$ for which the total cost takes the minimum value while changing the value of $x_r$ within a range of 0 or greater and smaller than 1. Regarding $x_r$ of the specified routes, the narrowing-down unit 153 selects a route for which the value of $x_r$ is greater than the threshold (thres = 0).

As described above, the narrowing-down unit 153 performs narrowing-down by selecting a route based on the value of $x_r$ for which the condition of the constraint expression is satisfied and the total cost is minimized.

The narrowing-down unit 153 executes a process of solving the linear relaxation problem a plurality of times as follows. The narrowing-down unit 153 sets a set of all the generated routes as the "first route set". The narrowing-down unit 153 sets an empty set as the "second route set".

The narrowing-down unit 153 alternately and repeatedly executes the following operations 1 and 2 n times (for example, four times). In the operation 1, the narrowing-down unit 153 solves an optimization problem of selecting an optimum route from among route candidates included in the first route set, by linear relaxation.

In the operation 2, the narrowing-down unit 153 removes, from the first route set, a route r satisfying $x_r$ > thres in the solution of the operation 1, and adds the route r to the second route set. The narrowing-down unit 153 outputs information on the second route set to the objective function generation unit 154.

The objective function generation unit 154 is a processing unit that generates an objective function to be input to the arithmetic unit 155. The objective function generation unit 154 outputs information on the generated objective function and the information on the second route set, to the arithmetic unit 155.

As represented by equation (3), the objective function generated by the objective function generation unit 154 is a function in which a cost term and a penalty term are added.

$$\text{Objective function} = \text{Cost term} + \text{Penalty term} \quad (3)$$

The cost term is represented by equation (4). The penalty term is represented by equation (5). r represents a route. $c_r$ indicates the cost of the route r. $x_r$ is a variable ($x_r \in \{0, 1\}$) indicating whether or not to select the route r. In a case of $x_r = 0$, the route r is not selected. In a case of $x_r = 1$, the route r is selected. i represents a node. $D_i$ represents the demand at the node i. $S_{r,i}$ represents the supply at the node i in the route r. $y_i$ is a variable (integer of 0 or greater) indicating how much the supply at the node i exceeds the demand.

[Equation 3]

$$\sum_{r \in R} c_r \, x_r \qquad \cdots (4)$$

[Equation 4]

$$\alpha \sum_{i=1}^{N} \left( \sum_{r \in R} S_{r,\,i} \, x_r - D_i - y_i \right)^2 \qquad \cdots (5)$$

The penalty term represented by equation (5) is designed as follows. In a case where the constraint expression represented by equation (6) is satisfied with all the nodes i, if $y_i (\geq 0)$ is set to an appropriate value, the penalty term becomes 0. In a case where the constraint expression represented by equation (6) is not satisfied with a certain node i, the penalty term takes a value greater than 0 even though $y_i (\geq 0)$ is set to any value. Note that, the equation (6) means that the sum of the supplies provided by the selected route satisfies the demand at all the nodes i.

[Equation 5]

$$\sum_{r\in R} S_{r,\,i}\, x_r \geq D_i \quad \text{for any } i \qquad \cdots (6)$$

The arithmetic unit 155 operates the Ising machine (optimization apparatus) to obtain the values of $x_r$ and $y_i$ for which the value of the objective function is minimized. Note that, the routes subjected to selection are the routes included in the second route set. For example, the arithmetic unit 155 selects one route for which the value of the objective function is minimized, from the second route set. The arithmetic unit 155 outputs information on the selected route to the output unit 156.

The output unit 156 is a processing unit that outputs the information on the route selected by the arithmetic unit 155 to the display unit 130 for display. The output unit may notify the external device or the like of the information on the route. Note that, the output of the arithmetic unit 155 is only a bit string indicating which route is selected. The output unit 156 may compare the output bit string with the second route set and output data of the selected route.

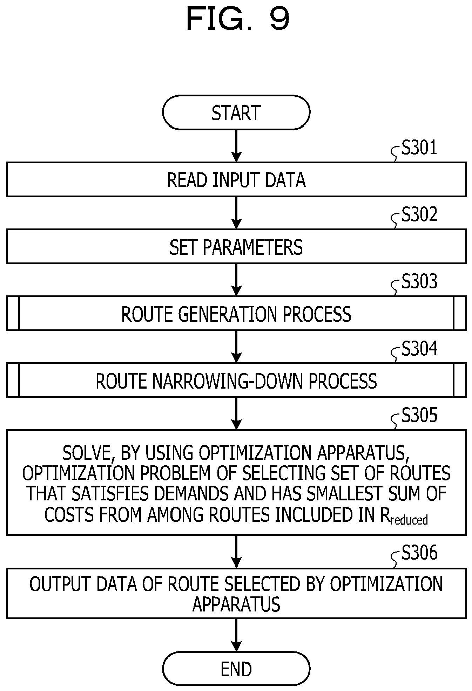

Next, an example of a process procedure of the information processing apparatus according to the embodiment will be described. FIG. 9 is a flowchart illustrating the process procedure of the information processing apparatus according to the embodiment. As illustrated in FIG. 9, the generation unit 152 in the information processing apparatus 100 reads input data (step S301). The input data includes the demand of each node, the time window, and the travel time between nodes. The generation unit 152 sets parameters (in step S302). The parameters include a parameter (num_times) indicating how many times the linear relaxation problem is solved in order to narrow down routes, and a parameter (thres) indicating whether a route for which the value of a solution is greater than which value remains after the linear relaxation problem is solved, in order to narrow down routes.

The generation unit 152 executes a route generation process (step S303). The narrowing-down unit 153 in the information processing apparatus 100 performs the narrowing-down process (step S304).

The arithmetic unit 155 in the information processing apparatus 100 solves, by using the optimization apparatus (Ising machine), an optimization problem of selecting a set of routes that satisfies the demands and has the smallest sum of costs from among routes included in $R_{reduced}$ (step S305). The output unit 156 in the information processing apparatus 100 outputs data of the set of routes selected by the optimization problem (step S306).

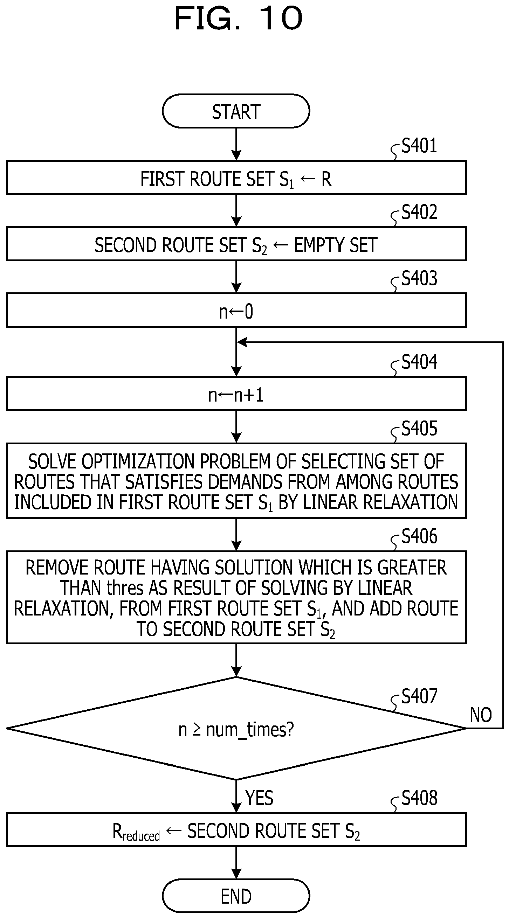

The route generation process described in step S303 in FIG. 9 corresponds to the route generation process described with reference to FIG. 4. An example of the route narrowing-down process described in step S304 in FIG. 9 will be described. FIG. 10 is a flowchart illustrating a process procedure of the route narrowing-down process. As illustrated in FIG. 10, the narrowing-down unit 153 in the information processing apparatus 100 sets R in the first route set $S_1$ (step S401). The narrowing-down unit 153 sets an empty set as the second route set $S_2$ (step S402).

The narrowing-down unit 153 sets 0 to n (step S403). The narrowing-down unit 153 updates n with a value obtained by adding 1 to n (step S404). The narrowing-down unit 153 solves the optimization problem of selecting a set of routes that satisfies the demands from among the routes included in the first route set $S_1$ by linear relaxation (step S405). The narrowing-down unit 153 removes, from the first route set $S_1$, a route having a solution which is greater than thres as the result of solving the optimization problem by the linear relaxation, and adds the route to the second route set $S_2$ (step S406).

If the value of n is not equal to or greater than num_times (No in step S407), the narrowing-down unit 153 causes the process to proceed to step S404. If the value of n is equal to or greater than num_times (Yes in step S407), the narrowing-down unit 153 sets the second route set $S_2$ to $R_{reduced}$ (step S408).

Next, effects of the information processing apparatus 100 according to the embodiment will be described. The information processing apparatus 100 solves the linear relaxation problem a plurality of times when narrowing down the plurality of routes satisfying the conditions of the vehicle routing problem. Thus, it is possible to efficiently narrow down the route candidates to be selected by the optimization apparatus, and thus to reduce the time taken by the optimization apparatus to select the optimum route.

For example, in the linear relaxation problem, a value $x_r$ indicating whether or not the route corresponds to the route satisfying the constraint expression is expanded to a real number which is equal to or greater than 0 and smaller than 1, and the route for which the value of $x_r$ when the total cost is minimized is equal to or greater than the threshold is selected. In a case where the linear relaxation is not performed, only "0" or "1" is set to $x_r$. Thus, it is not possible to finely adjust the value, and it takes time to specify $x_r$ for which the total cost is minimized. In a case where the linear relaxation is performed, it is possible to set a real number which is equal to or greater than 0 and equal to or smaller than 1 to $x_r$. Thus, it is possible to finely adjust the value and to efficiently specify $x_r$ for which the total cost is minimized.

The information processing apparatus 100 executes the narrowing-down process again on the remaining routes excluding the specified route from the plurality of routes. Thus, it is possible to suppress omission of a route that may be selected as the optimum solution by calculation of the arithmetic unit 155.

The effect of the present disclosure is measured for test data. The test data is as follows. There are two vehicle types for vehicles for use in transport. It is assumed for the first vehicle type that the maximum number of goods that may be loaded is 21 and the cost is 17 to 21 (which changes depending on the operation time). It is assumed for the second vehicle type that the maximum number of goods that may be loaded is 12 and the cost is 13 to 16 (which changes depending on the operation time).

The demands of all the nodes may be satisfied by the following number of vehicles at the minimum. For example, 9 vehicles are set for the first vehicle type. 39 vehicles are set for the second vehicle type.

As a comparative method (reference technique), a method of calculating the operation time of each route and removing a route having the travel time which is equal to or longer than a threshold is performed. In the reference technique, it is difficult to set an appropriate threshold. For a certain threshold, the number of routes after the narrowing-down is "585". In a case where the Ising machine is used as the optimization apparatus that selects an optimum set of routes from the narrowed routes, such a number of routes (585) is too large. Thus, it is difficult to obtain a solution.

On the other hand, in the information processing apparatus 100 described in the embodiment, the method of solving the linear relaxation problem a plurality of times is performed. When narrowing-down is performed by setting the number of times n of solving the linear relaxation problem to n = 4 and setting the narrowing parameter as thres = 0, the number of routes after narrowing-down is "231". Even in a case where the Ising machine is used as the optimization apparatus that selects the optimum route from the narrowed routes, a solution may be obtained. The cost of the optimum solution which may be selected from the routes after the narrowing-down is equal to the cost of the optimum solution which may be selected from the routes before the narrowing-down. In other words, according to the information processing apparatus 100, it is also possible to narrow down the routes without losing the optimization.

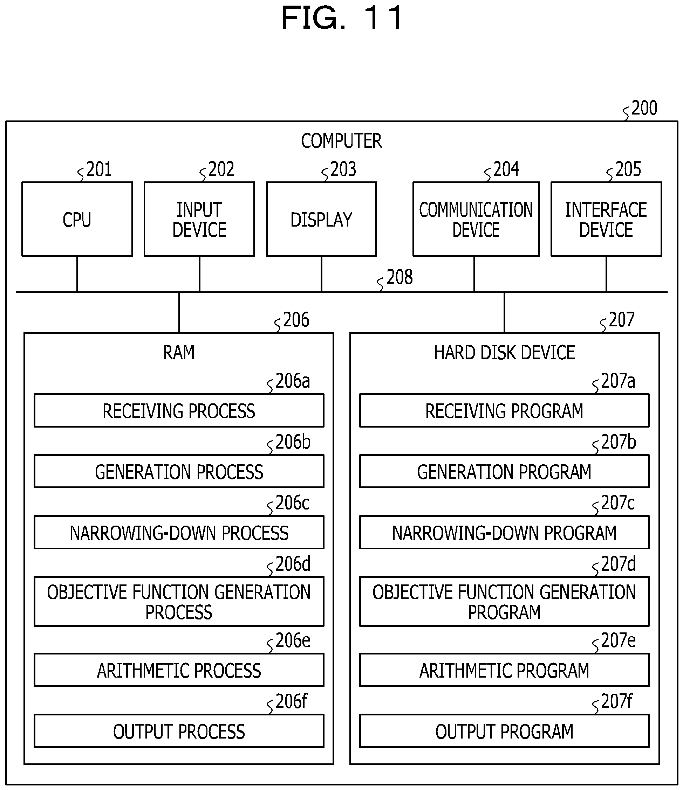

Next, an example of a hardware configuration of a computer that implements the similar functions to those of the information processing apparatus 100 described in the above embodiment will be described. FIG. 11 is a diagram illustrating the example of the hardware configuration of the computer that implements the functions similar to those of the information processing apparatus in the embodiment.

As illustrated in FIG. 11, a computer 200 includes a CPU 201 that executes various types of arithmetic processes, an input device 202 that accepts input of data from a user, and a display 203. The computer 200 also includes a reading device 204 that reads a program or the like from a storage medium, and a communication device 205 that transmits and receives data to and from the external device and the like via a wired or wireless network. The computer 200 also includes a RAM 206 that temporarily stores various types of information, and a hard disk device 207. The CPU 201, the input device 202, the display 203, the reading device 204, the communication device 205, the RAM 206, and the hard disk device 207 are coupled to a bus 208.

The hard disk device 207 includes a receiving program 207a, a generation program 207b, a narrowing-down program 207c, an objective function generation program 207d, an arithmetic program 207e, and an output program 207f. The CPU 201 reads the receiving program 207a to the output program 207f into the RAM 206.

The receiving program 207a functions as a receiving process 206a. The generation program 207b functions as a generation process 206b. The narrowing-down program 207c functions as a narrowing-down process 206c. The objective function generation program 207d functions as an objective function generation process 206d. The arithmetic program 207e functions as an arithmetic process 206e. The output program 207f functions as an output process 206f.

The process of the receiving process 206a corresponds to the process of the receiving unit 151. The process of the generation process 206b corresponds to the process of the generation unit 152. The process of the narrowing-down process 206c corresponds to the process of the narrowing-down unit 153. The process of the objective function generation process 206d corresponds to the process of the objective function generation unit 154. The process of the arithmetic process 206e corresponds to the process of the arithmetic units 155. The process of the output process 206f corresponds to the process of the output unit 156.

Note that, the receiving program 207a to the output program 207f may not be stored in the hard disk device 207 from the beginning. For example, the programs may be stored in a "portable physical medium", such as a flexible disk (FD), a compact disc read-only memory (CD-ROM), a digital versatile disc (DVD), a magneto-optical disk, or an integrated circuit (IC) card, to be inserted into the computer 200. The computer 200 may read and execute the receiving program 207a to the output program 207f.

**Claims**

1. An information processing apparatus comprising:

   a generation unit configured to generate a plurality of routes satisfying a first condition among a plurality of conditions included in a vehicle routing problem;
   a narrowing-down unit configured to, when a total cost for each route satisfying a second condition among the plurality of conditions is calculated from the plurality of routes, perform narrowing-down on the plurality of routes based on the total cost and a value that is set for the route, the value indicating whether or not the route satisfies the second condition and being set to a real number which is equal to or greater than 0 and equal to or smaller than 1 by linear relaxation; and
an arithmetic unit configured to calculate a route satisfying the first condition and the second condition based on information on the plurality of routes narrowed down by the narrowing-down unit.

2. The information processing apparatus according to claim 1, wherein
the narrowing-down unit performs the narrowing-down by repeatedly executing a process of calculating the total cost while changing the value set for the route and by specifying the route for which the value set for the route is equal to or greater than a threshold when the total cost is a minimum value.

3. The information processing apparatus according to claim 2, wherein
the narrowing-down unit performs the narrowing-down again on remaining routes excluding the specified route from the plurality of routes.

4. The information processing apparatus according to any one of claims 1 to 3 further comprising:
an objective function generation unit configured to generate information on an objective function for the plurality of routes narrowed down by the narrowing-down unit.

5. The information processing apparatus according to claim 1, wherein
the arithmetic unit calculates the route satisfying the first condition and the second condition by inputting the information on the plurality of routes narrowed down to an Ising machine.

6. The information processing apparatus according to claim 5, further comprising:
an objective function generation unit configured to generate information on an objective function for the plurality of routes narrowed down by the narrowing-down unit, and input the generated information to the Ising machine.

7. A route generation method comprising:

generating a plurality of routes satisfying a first condition among a plurality of conditions included in a vehicle routing problem;
when a total cost for each route satisfying a second condition among the plurality of conditions is calculated from the plurality of routes, performing narrowing-down on the plurality of routes based on the total cost and a value that is set for the route, the value indicating whether or not the route satisfies the second condition and being set to a real number which is equal to or greater than 0 and equal to or smaller than 1 by linear relaxation; and calculating a route satisfying the first condition and the second condition based on information on the plurality of routes narrowed down.

8. The route generation method according to claim 7, wherein
the narrowing-down includes repeatedly executing a process of calculating the total cost while changing the value set for the route, and specifying the route for which the value set for the route is equal to or greater than a threshold when the total cost is a minimum value.

9. The route generation method according to claim 7 or 8, further comprising:
generating information on an objective function for the plurality of routes narrowed down.

10. The route generation method according to claim 7, wherein
the calculating includes calculating the route satisfying the first condition and the second condition by inputting the information on the plurality of routes narrowed down to an Ising machine.

11. The route generation method according to claim 10, further comprising:

generating information on an objective function for the plurality of routes narrowed down by the narrowing-down unit; and
inputting the generated information to the Ising machine.

12. A route generation program comprising:

generating a plurality of routes satisfying a first condition among a plurality of conditions included in a vehicle routing problem;

when a total cost for each route satisfying a second condition among the plurality of conditions is calculated from the plurality of routes, performing narrowing-down on the plurality of routes based on the total cost and a value that is set for the route, the value indicating whether or not the route satisfies the second condition and being set to a real number which is equal to or greater than 0 and equal to or smaller than 1 by linear relaxation; and calculating a route satisfying the first condition and the second condition based on information on the plurality of routes narrowed down.

13. The route generation program according to claim 12, wherein
the narrowing-down includes repeatedly executing a process of calculating the total cost while changing the value set for the route, and specifying the route for which the value set for the route is equal to or greater than a threshold when the total cost is a minimum value.

14. The route generation program according to claim 12, wherein
the calculating includes calculating the route satisfying the first condition and the second condition by inputting the information on the plurality of routes narrowed down to an Ising machine.

15. The route generation program according to claim 14, further comprising:

generating information on an objective function for the plurality of routes narrowed down by the narrowing-down unit; and
inputting the generated information to the Ising machine.

## FIG. 1

FIRST TRANSPORT

$r1$

LOCATION $p_{1,1},p_{1,2},p_{1,3}$
LOAD $x_{1,1},x_{1,2},x_{1,3}$

$r2$

LOCATION $p_{2,1},p_{2,2}$
LOAD $x_{2,1},x_{2,2}$

$r3$

LOCATION $p_{3,1}$
LOAD $x_{3,1}$

SECOND TRANSPORT

$r4$   $r5$   $r6$

$r7$   ...

$r8$   ...

...   ...

n-TH TRANSPORT

...

# FIG. 2

# FIG. 3

```
          ┌─────────────┐
          │    START    │
          └─────────────┘
                 │
                 ▼              ⌐S101
   ┌─────────────────────────────────┐
   │          READ INPUT DATA         │
   └─────────────────────────────────┘
                 │
                 ▼              ⌐S102
   ┌─────────────────────────────────┐
   │           SET PARAMETER          │
   └─────────────────────────────────┘
                 │
                 ▼              ⌐S103
   ┌┤──────────────────────────────┤┐
   │      ROUTE GENERATION PROCESS    │
   └┤──────────────────────────────┤┘
                 │
                 ▼              ⌐S104
   ┌─────────────────────────────────┐
   │ REMOVE ROUTE HAVING OPERATION    │
   │ TIME WHICH IS EQUAL TO OR LONGER │
   │ THAN THRESHOLD (duration_thres)  │
   │ FROM ROUTES INCLUDED IN R        │
   └─────────────────────────────────┘
                 │
                 ▼              ⌐S105
   ┌─────────────────────────────────┐
   │ SOLVE, BY USING OPTIMIZATION     │
   │ APPARATUS, OPTIMIZATION PROBLEM  │
   │ OF SELECTING SET OF ROUTES THAT  │
   │ SATISFIES DEMANDS AND HAS        │
   │ SMALLEST SUM OF COSTS FROM       │
   │ AMONG ROUTES INCLUDED IN R       │
   └─────────────────────────────────┘
                 │
                 ▼              ⌐S106
   ┌─────────────────────────────────┐
   │ OUTPUT DATA OF ROUTE SELECTED BY │
   │ OPTIMIZATION APPARATUS           │
   └─────────────────────────────────┘
                 │
                 ▼
          ┌─────────────┐
          │     END     │
          └─────────────┘
```

# FIG. 4

START

S201

$i \leftarrow 0$

S202

SET DEMAND OF INPUT DATA TO REMAINING DEMAND

S203

$i \leftarrow i+1$

S204

GENERATE ROUTE FOR TRANSPORTING REMAINING DEMAND AS ROUT OF i-TH TRANSPORT

S205

SET SET OF GENERATED ROUTES AS $R_i$

S206

UPDATE VALUE OF REMAINING DEMAND TO VALUE OF REMAINING DEMAND THAT REMAINS AFTER GOODS ARE TRANSPORTED ALONG GENERATED ROUTE $\in R_i$

S207

IS REMAINING DEMAND AFTER TRANSPORT ALONG CERTAIN ROUTE 0 AT ALL NODES?

NO

YES

S208

$R \leftarrow U_i R_i$

S209

CALCULATE OPERATION TIME OF EACH ROUTE IN R BASED ON TIME WINDOW OF EACH NODE AND TRAVEL TIME BETWEEN NODES

S210

CALCULATE COST OF EACH ROUTE IN R FROM OPERATION TIME

END

# FIG. 5

INFORMATION PROCESSING APPARATUS 100

CONTROL UNIT 150

RECEIVING UNIT 151

GENERATION UNIT 152

NARROWING-DOWN UNIT 153

OBJECTIVE FUNCTION GENERATION UNIT 154

ARITHMETIC UNIT 155

OUTPUT UNIT 156

STORAGE UNIT 140

TRAVEL TIME TABLE 141

DEMAND TABLE 142

TIME WINDOW TABLE 143

COMMUNICATION UNIT 110

INPUT UNIT 120

DISPLAY UNIT 130

# FIG. 6

141

|  | DEPOT | NODE nd1 | NODE nd2 | ... |
|---|---|---|---|---|
| DEPOT | 0 MINUTES | 10 MINUTES | 15 MINUTES | ... |
| NODE nd1 | 10 MINUTES | 0 MINUTES | 5 MINUTES | ... |
| NODE nd2 | 15 MINUTES | 5 MINUTES | 0 MINUTES | ... |
| ... | ... | ... | ... | ... |

# FIG. 7

142

| TRANSPORT SOURCE | TRANSPORT DESTINATION | DEMAND |
|---|---|---|
| DEPOT | NODE nd1 | 5 |
| DEPOT | NODE nd2 | 3 |
| NODE nd2 | DEPOT | 2 |
| … | … | … |

# FIG. 8

143

|  | EARLIEST ARRIVAL TIME | LAST ARRIVAL TIME |
|---|---|---|
| DEPOT | – | 20:00 |
| NODE nd1 | 17:00 | 19:00 |
| NODE nd2 | 18:00 | 19:30 |
| … | … | … |

# FIG. 9

```
          ┌─────────────┐
          │    START    │
          └─────────────┘
                 │
                 ▼                      ⌇S301
   ┌────────────────────────────────────────┐
   │           READ INPUT DATA              │
   └────────────────────────────────────────┘
                 │
                 ▼                      ⌇S302
   ┌────────────────────────────────────────┐
   │            SET PARAMETERS              │
   └────────────────────────────────────────┘
                 │
                 ▼                      ⌇S303
   ┌┃────────────────────────────────────┃┐
   │┃      ROUTE GENERATION PROCESS      ┃│
   └┃────────────────────────────────────┃┘
                 │
                 ▼                      ⌇S304
   ┌┃────────────────────────────────────┃┐
   │┃    ROUTE NARROWING-DOWN PROCESS    ┃│
   └┃────────────────────────────────────┃┘
                 │
                 ▼                      ⌇S305
   ┌────────────────────────────────────────┐
   │     SOLVE, BY USING OPTIMIZATION       │
   │            APPARATUS,                  │
   │ OPTIMIZATION PROBLEM OF SELECTING SET  │
   │ OF ROUTES THAT SATISFIES DEMANDS AND   │
   │ HAS SMALLEST SUM OF COSTS FROM AMONG   │
   │  ROUTES INCLUDED IN R_reduced          │
   └────────────────────────────────────────┘
                 │
                 ▼                      ⌇S306
   ┌────────────────────────────────────────┐
   │ OUTPUT DATA OF ROUTE SELECTED BY       │
   │      OPTIMIZATION APPARATUS            │
   └────────────────────────────────────────┘
                 │
                 ▼
          ┌─────────────┐
          │     END     │
          └─────────────┘
```

In step S305: SOLVE, BY USING OPTIMIZATION APPARATUS, OPTIMIZATION PROBLEM OF SELECTING SET OF ROUTES THAT SATISFIES DEMANDS AND HAS SMALLEST SUM OF COSTS FROM AMONG ROUTES INCLUDED IN $R_{reduced}$

# FIG. 10

START

S401

FIRST ROUTE SET $S_1 \leftarrow R$

S402

SECOND ROUTE SET $S_2 \leftarrow$ EMPTY SET

S403

$n \leftarrow 0$

S404

$n \leftarrow n+1$

S405

SOLVE OPTIMIZATION PROBLEM OF SELECTING SET OF ROUTES THAT SATISFIES DEMANDS FROM AMONG ROUTES INCLUDED IN FIRST ROUTE SET $S_1$ BY LINEAR RELAXATION

S406

REMOVE ROUTE HAVING SOLUTION WHICH IS GREATER THAN thres AS RESULT OF SOLVING BY LINEAR RELAXATION, FROM FIRST ROUTE SET $S_1$, AND ADD ROUTE TO SECOND ROUTE SET $S_2$

S407

$n \geq$ num_times?

NO

YES

S408

$R_{reduced} \leftarrow$ SECOND ROUTE SET $S_2$

END

# FIG. 11

200

COMPUTER

| 201 | 202 | 203 | 204 | 205 |
|-----|-----|-----|-----|-----|
| CPU | INPUT DEVICE | DISPLAY | COMMUNICATION DEVICE | INTERFACE DEVICE |

208

206

RAM

206a
RECEIVING PROCESS

206b
GENERATION PROCESS

206c
NARROWING-DOWN PROCESS

206d
OBJECTIVE FUNCTION GENERATION PROCESS

206e
ARITHMETIC PROCESS

206f
OUTPUT PROCESS

207

HARD DISK DEVICE

207a
RECEIVING PROGRAM

207b
GENERATION PROGRAM

207c
NARROWING-DOWN PROGRAM

207d
OBJECTIVE FUNCTION GENERATION PROGRAM

207e
ARITHMETIC PROGRAM

207f
OUTPUT PROGRAM

# FIG. 12

| | Europäisches Patentamt<br>European Patent Office<br>Office européen des brevets | **EUROPEAN SEARCH REPORT** | **Application Number**<br>EP 21 15 2287 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION  (IPC) |
|---|---|---|---|
| X | US 2018/268371 A1 (VAN HENTENRYCK PASCAL [US] ET AL) 20 September 2018 (2018-09-20)<br>* abstract *<br>* paragraph [0003] - paragraph [0006] *<br>* paragraph [0020] - paragraph [0031] *<br>* line 36 - line 54 *<br>* paragraph [0055] - paragraph [0061] *<br>----- | 1-15 | INV.<br>G06Q10/00<br>G06Q10/04<br>G06Q50/30 |
| X | US 2007/282618 A1 (BARAHONA FRANCISCO [US] ET AL) 6 December 2007 (2007-12-06)<br>* abstract *<br>* paragraph [0132] - paragraph [0141] *<br>----- | 1-15 | |
| X | WO 2018/079443 A1 (MITSUBISHI HEAVY IND LTD [JP]; UNIV KYOTO [JP])<br>3 May 2018 (2018-05-03)<br>* abstract *<br>* paragraph [0004] - paragraph [0012] *<br>* paragraph [0025] - paragraph [0027] *<br>* paragraph [0068] - paragraph [0074] *<br>----- | 1-15 | |
| | | | **TECHNICAL FIELDS<br>SEARCHED      (IPC)**<br><br>G06Q |

The present search report has been drawn up for all claims

| Place of search | Date of completion of the search | Examiner |
|---|---|---|
| Munich | 15 February 2021 | Anastasov, Yuliyan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

               

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 15 2287

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2021

| Patent document cited in search report | | Publication date | Patent family member(s) | Publication date |
|---|---|---|---|---|
| US 2018268371 A1 | | 20-09-2018 | NONE | |
| US 2007282618 A1 | | 06-12-2007 | NONE | |
| WO 2018079443 A1 | | 03-05-2018 | JP      6692022 B2 | 13-05-2020 |
| | | | JP   2018073213 A | 10-05-2018 |
| | | | SG 11201901115S A | 30-05-2019 |
| | | | TW    201830298 A | 16-08-2018 |
| | | | WO   2018079443 A1 | 03-05-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017167757 A

- JP 2019028992 A